# EUROPEAN PATENT APPLICATION

(11) **EP 4 725 984 A1**
(43) Date of publication of application: **15.04.2026**
(21) Application number: 24724570.7
(22) Date of filing: 18.03.2024
(51) Int. Cl.: C08J 11/22, C08J 11/26, C10B 53/07, C08J 11/12, C10B 57/00

(54) **RECYCLING OF EPOXY RESIN AND CARBON FIBRE COMPOSITE MATERIAL BY COMBINING A FIRST PYROLYSIS STEP WITH A SECOND SOLVOLYSIS STEP**

(30) Priority: 08.06.2023 ES 202330478
(71) Applicant: Patentes Talgo, S.L.U., 28290 Las Matas, Madrid (ES)
(72) Inventor: DE LA GUERRA OCHOA, Eduardo, 28290 Las Matas (Madrid) (ES); IZQUIERDO ARRUFERIA, June, 28290 Las Matas (Madrid) (ES); CERDEIRA PEINADO, Marta, 28290 Las Matas (Madrid) (ES); AZCONA CALERO, Mikel, 28290 Las Matas (Madrid) (ES); URRUZOLA CARRERA, Eneko, 28290 Las Matas (Madrid) (ES); GARCÍA GARCÍA, Emilio, 28290 Las Matas (Madrid) (ES)
(74) Representative: Elzaburu S.L.P.
(86) International application number: PCT/ES2024/070172
(87) International publication number: WO 2024/252038

(57) **Abstract**

The present invention falls within the technical field of recycling and relates in particular to the recycling of a material composed of carbon fibre and an epoxy resin.

## Description

### OBJECT OF THE INVENTION

The present invention falls within the technical field of recycling and relates in particular to the recycling of a material composed of carbon fibre and an epoxy resin. A physico-chemical recycling method for carbon fibre and epoxy resin composites is described. The advantages of this method are: it allows the recovery of long and high-quality fibre from cured and uncured pieces, thicknesses of up to 60 mm can be treated, it can be combined with milling or not, depending on the need to control the size of the fibre.

### BACKGROUND TO THE INVENTION

Resin and carbon fibre reinforced composites have high strength and rigidity combined with low weight and are preferably used in fields where these characteristics are required. For example, they are used in the aerospace industry, in the wind energy industry, in vehicle and train construction and for sports equipment.

Due to their wide application in different sectors, a lot of waste is produced both at the end of life of the products and during the manufacturing process. The recovery of the elements that make up the composite material, mainly carbon fibres, is very relevant due to their high price, as well as an increase in the circularity (recyclability and recoverability) of this type of materials in, order to minimize their environmental impact. In addition, synthetic waste containing carbon fibres, due to their chemical inertness, can generally be expected to remain unchanged for a long period of time, and cannot be degraded in landfills. Also, legal requirements in many European countries do not allow unlimited landfilling of waste containing carbon fibres.

Recycling should be oriented towards the separation of the resin from the carbon fibre to recover the fibre. One way of extracting the resin is by thermal degradation. This process can cause changes in the fibre surface, leading to a decrease in fibre properties and difficulties in fibre-matrix adhesion. The resin can also be extracted by means of solvents.

There is great demand for new recycling processes for composite materials and especially for processes that allow the recovery of carbon fibres that can be used in new elements. WO03/089212A1 therefore relates to a method and a device for recycling carbon fibres or glass fibres from composite materials, in particular to a process for recycling carbon fibres or glass fibres from fibre-reinforced composite materials by heat treatment in a two-step process wherein, in a first process step, the fibre-reinforced composite material is subjected to pyrolysis, which is followed, in a second process step, by washing of the fibres obtained in the first step.

ES2597082 entitled, "Pyrolysis installation and procedure for recovering carbon fibres from synthetic materials containing carbon fibres, and recovered carbon fibres", describes a pyrolysis installation and procedure for recovering carbon fibres from synthetic materials containing carbon fibres, wherein the pyrolysis installation and procedure must ensure uniform heating of the material.

It is still necessary to develop new methods of recycling carbon fibres in composite materials that allow the recovery of the fibres without damaging them.

### DESCRIPTION OF THE INVENTION

The object of the invention consists in the recycling of a cured epoxy resin and carbon fibre composite material.

Epoxy resin-based materials are reinforced with carbon fibres. Epoxy resin is thermostable. It is cured to reach the solid state. With fibre and resin a composite material is obtained, i.e. a material made from the joining of two or more components, which give rise to a new one with superior properties and qualities, which are not achievable by each of the components independently. The carbon fibre provides rigidity and strength to the thermostable resin matrix.

With the method of the invention it is possible to recover carbon fibres from cured epoxy matrices, which is very important due to the high cost of the fibre. It is important to obtain fibres of the largest possible longitudinal size. One of the advantages of the present method is to obtain a fibre of a size as close to the original or any desired size, avoiding fibre fragmentation and size reduction.

The method described in the present invention comprises at least a first pyrolysis stage and a second solvolysis stage. In the pyrolysis stage, the resin is degraded and the fibre layers are exfoliated, allowing the second stage of the process to be more effective and to treat large thicknesses of cured pieces (up to 60 mm). One of the objectives of the method is to obtain the fibre of the largest possible size and as clean as possible, as this maintains its mechanical properties. With the pyrolysis step, the exfoliation of the fibre layers improves the surface area that comes into contact with the solvents of the solvolysis step. Furthermore, with the method of the invention the need for a grinding step prior to solvolysis is minimised, it being compatible with grinding if a controlled fibre size is to be obtained.

The method comprises at least two stages, a first pyrolysis stage and a second solvolysis stage with water or with hydrogen peroxide and acetic acid.

The order of the steps is relevant, pyrolysis should be the first stage to exfoliate the material and make solvolysis more effective.

Thanks to the combination of the steps and their order, a good quality fibre is obtained, which implies an adequate fibre diameter, a fibre length up to 30 cm, good mechanical properties and no resin residues.

Therefore, it is an aspect of the invention a method for recycling a material composed of a cured epoxy resin and carbon fibres comprising a first pyrolysis step and a second solvolysis step with water or with hydrogen peroxide and acetic acid.

### DESCRIPTION OF THE DRAWINGS

To complement the description of the invention and for the purpose of aiding the better understanding of its characteristics, in accordance with a preferred example of the embodiment thereof, a set of drawings is attached as an integral part of the description, wherein, by way of illustration and not limitation, the following figures have been represented:
Figure 1 shows the result of the comparative example 1, solvolysis at 120ºC and 4h with a 90/10 %/v/v ratio.
Figure 2 shows the heat treatment performed in comparative example 2 for the samples. TEMP1 is equal to the reactor temperature, TEMP2 is equal to the imposed temperature and TEMP T is equal to the temperature recorded in the condensation zone.
Figure 3 shows the scanning electron microscopy result of the pyrolysis of comparative example 2.
Figure 4 shows the results after solvolysis of pyrolysed fibre with acetic acid and hydrogen peroxide (80/20 %) with a fibre/solvent ratio of 1g/60 ml. a) pyrolysed and disintegrated fibre, b) recycled fibre after solvolysis.
Figure 5 shows the results of a solvolysis of pyrolysed fibre with acetic acid and hydrogen peroxide (90/10 %) with a fibre/solvent ratio of 1g/60 ml. a) pyrolysed and disintegrated fibre, b) recycled fibre after solvolysis.
Figure 6 shows the results of a solvolysis of pyrolysed fibre with recycled acetic acid and hydrogen peroxide (80/20 %) with a fibre/solvent ratio of 1g/60 ml. a) pyrolysed and disintegrated fibre, b) recycled fibre after solvolysis.
Figure 7 shows the results of a solvolysis of pyrolysed fibre with acetic acid and hydrogen peroxide (85/15 %) with a fibre/solvent ratio of 1g/30 ml. a) pyrolysed and disintegrated fibre, b) recycled fibre after solvolysis.
Figure 8 shows the results of a solvolysis of pyrolysed fibre with acetic acid and hydrogen peroxide (90/10 %) with a fibre/solvent ratio of 1g/25 ml. a) pyrolysed and disintegrated fibre, b) recycled fibre after solvolysis.

### DETAILED DESCRIPTION

As stated a method for recycling a cured epoxy resin and carbon fibre composite material is an aspect of the invention, comprising a first pyrolysis step and a second solvolysis step with water or with hydrogen peroxide and acetic acid.

Temperature control is very important. Thus, preferably the temperatures of the steps are: pyrolysis at a temperature in a range of 200 ºC to 650 ºC and solvolysis at a temperature in a range of 80 ºC to 160 ºC. The temperature range of pyrolysis implies that the atmosphere where it takes place has low oxygen concentration and this avoids oxidation and combustion, so that the reaction is endothermic. Solvolysis uses neither high pressure nor high temperature. More preferably the pyrolysis step is performed in a time range comprised from 2 hours to 8 hours and the solvolysis step is performed in a time range comprised from 2 hours to 6 hours.

Preferably the thickness of the composite material to which the method is applied is from 2 mm to 35 mm, more preferably from 25 mm to 30 mm.

Preferably, the solvolysis step is performed with continuous stirring.

Preferably, the volume/volume ratio of acetic acid/water or hydrogen peroxide is in the range 50/50 to 99/1. More preferably in the range of 80/20 to 90/10.

Preferably, in the solvolysis step the acetic acid used is acetic acid recycled from the process itself.

Preferably, per gram of sample, the volume of acetic acid/water or hydrogen peroxide in the solvolysis step is between 20 ml and 100 ml.

### EXAMPLES OF THE INVENTION

### Example 1: Comparative example of the invention

### Solvolysis

The sample of 5 g was immersed in a solution of acetic acid and hydrogen peroxide with a fibre/solvent ratio of 1/60 g/ml, with stirring and if necessary refluxing for 4 hours. Initially only the acetic acid/oxygenated water ratio was varied from 95/5 to 90/10 % (v/v) and the temperature from 65 °C to 120 °C.

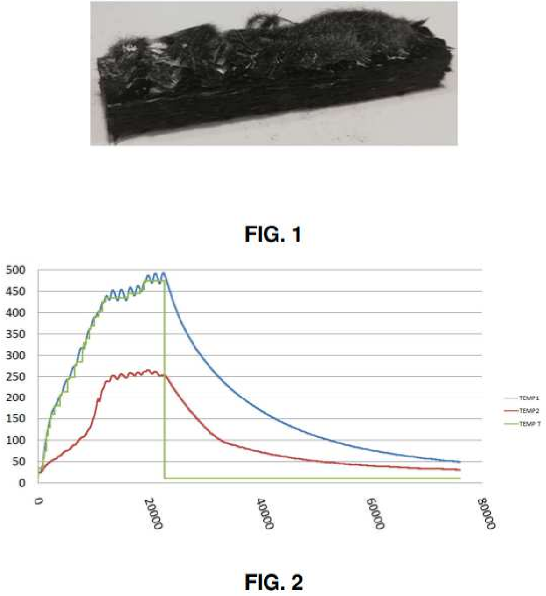

Reactions with a 95/5 % (v/v) ratio below 100 °C and 120 °C only showed some effect on the sample surface. Therefore, the ratio was changed to 90/10 % (v/v) and the temperature was increased. The best result was obtained at 120 °C and at 4 hrs. This is shown in Figure 1.

Figure 1 shows the surface layers completely free of matrix, but due to the thickness of the sample, the inner layers were not found to be clean.

This led to the conclusion that the diffusion of the solvent in the sample must be maximised in order to achieve totally clean fibre.

### Example 2: Comparative example of the invention

### Pyrolysis

In view of the limitations of solvolysis, it was decided to opt for thermal treatment, pyrolysis. The literature determined that the epoxy polymer has two heating stages. In the first stage of pyrolysis, a decomposition in two phases or periods is obtained, where, in the first one, a decomposition of 75% of the matrix is achieved up to 630 °C and the rest, in a second decomposition up to 745°C.

One of the handicaps of this technology is that in the range 590-630 °C pyrolytic carbon is generated which hinders the decomposition of the matrix and the second handicap is that if the temperature is increased too much the fibres are damaged.

With these concepts in mind, heat treatments below 500 °C, the range with the highest matrix degradation, were performed on 2 kg samples from wind blades with a thickness of 15 mm. The main variables were the weight to be introduced into the reactor and the total reaction time.

The heat treatment was carried out as follows; it was heated gradually to 435 °C and maintained at that temperature for 1hr. The temperature was then increased for 30 minutes to 450 °C, the experiment was ended by gradually raising the temperature to 475 °C and maintained for 1hr. The reactor was allowed to cool to room temperature.

Table 1 showed the first reactions where the total reaction time initially increases (being inversely proportional to the heating rate used).

**Table 1**

| Sample | Initial weight (kg) | Final weight (kg) | Weight loss (%) | Maximum temperature (°C) | Reaction time (hrs, min) |
|---|---|---|---|---|---|
| Wind blade | 1,949 | 1,428 | 26.73 | 5.3 | 4.08 |
| Wind blade | 2,034 | 1,394 | 31.47 | 485 | 5.46 |
| Wind blade | 1,960 | 1,361 | 30.56 | 487 | 8.00 |
| Wind blade | 2,087 | 1,465 | 29.80 | 485 | 6.40 |
| Wind blade | 2,029 | 1,431 | 29.80 | 485 | 6.40 |
| Wind blade | 2,029 | 1,431 | 29.50 | 490 | 6.10 |

With the samples from the wind blades, it was determined that the maximum degradation was obtained at around 6 hours and 40 minutes.

Once the pyrolysis conditions were determined, the railway test specimens were used in search of similar results and reproducibility. The first step was to perform experiments with railway specimens with a thickness of 5-8 mm. Experiments were then carried out with real fractions used in the train with thicknesses of 9-23 mm.

Figure 2 shows the heat treatment performed.

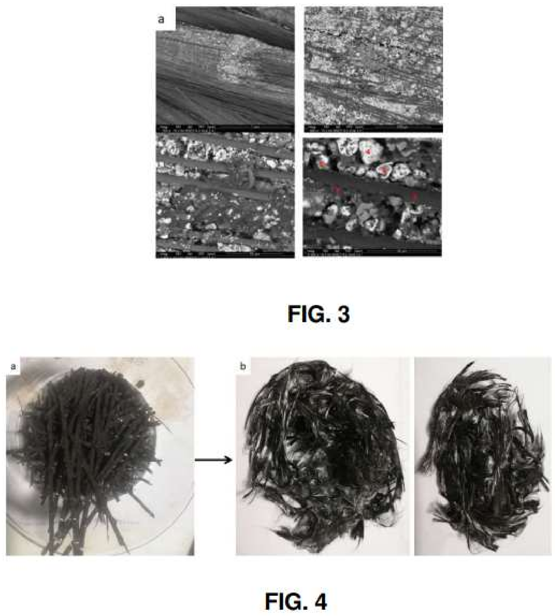

Figure 3 shows a micrograph obtained by SEM (scanning electron microscopy) technique showing the matrix residues to be removed.

Table 2 shows the general results obtained for the experiments carried out with the railway specimens. The weight loss is between 18% and 22%, depending on the amount of matrix in the parts.

**Table 2**

| Sample | Initial weight (kg) | Final weight (kg) | Weight loss (%) | Maximum temperature (°C) | Reaction time (hrs, min) |
|---|---|---|---|---|---|
| Railway specimen | 1,555 | 1,247 | 20 | 494 | 6.30 |
| Railway specimen | 3,040 | 2,450 | 19.04 | 499 | 7.16 |
| Real part | 4,402 | 3,531 | 19.72 | 486 | 6.42 |
| Real part | 3,296 | 2,560 | 22.33 | 484 | 7.30 |

With the heat treatment performed in pyrolysis, the matrix is not completely removed, but it allows the sample to be manipulated to increase the surface area of the sample (by easily undoing the part) and thus helps the diffusion of the solvent, the main problem of solvolysis, to remove the remains of the epoxy matrix.

### Example 3: Example of the invention

With the theoretical basis used in solvolysis, experiments were carried out by playing with the reaction time and the ratio of acetic acid/hydrogen peroxide leaving the temperature constant at 120 °C, stirring and refluxing. The best results were obtained with a ratio of 80/20 % (v/v) acetic acid/hydrogen peroxide with a ratio of 1g/60 ml fibre/solvent for 4 hrs. The results of these reactions are shown in Figure 4.

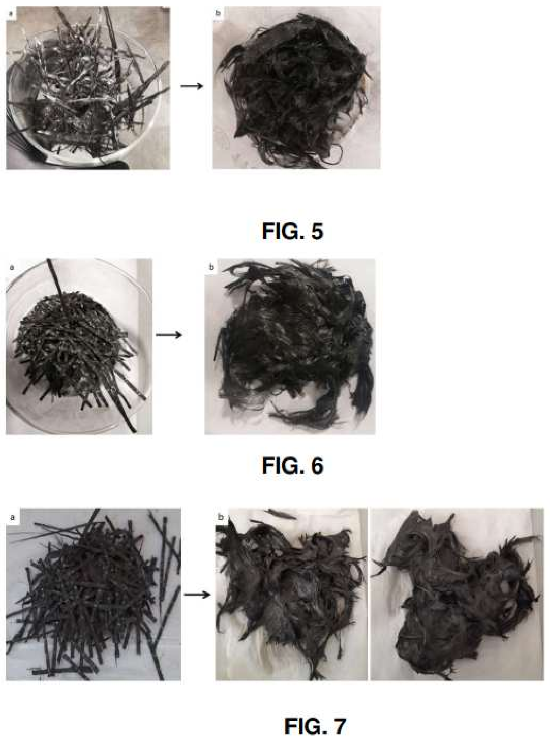

Similarly, good results were also obtained with a 90/10 % (v/v) acetic acid/hydrogen peroxide ratio of 1g/60 ml fibre/solvent for 6 hrs, Figure 5. The time had to be increased since the reaction was not yet finished and thus, the amount of hydrogen peroxide used in the reaction was reduced. Totally clean fibre was obtained with no loss of mechanical properties.

In addition, these reagents allow the acetic acid used to be recovered by distillation. This has a lower concentration than the one used in the original reactions, but it is sufficient so that only by renewing the hydrogen peroxide the reaction works. Figure 6 presents the results of a solvolysis under the conditions of Figure 4 but with recycled acetic acid.

With this ratio it was studied how to reduce the amount of solvent used in the reaction by compensating for this with an increase in reaction time. A reduction of the solvent fibre ratio to 1g/30 ml was achieved with a 85/15 % (v/v) acetic acid/hydrogen peroxide ratio, as shown in Figure 7.

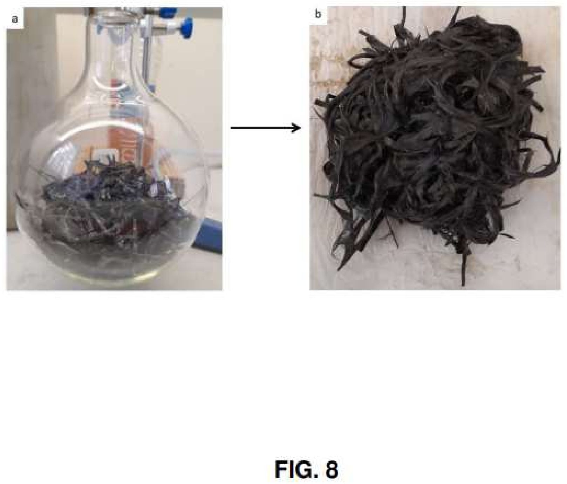

Clearly, increasing the solvent ratio as in the example in Figure 4 can further reduce the solvent fibre ratio at laboratory scale. Furthermore, with a fibre/solvent ratio of 1g/25 ml and with a ratio of acetic acid and water 90/10 % (v/v) almost complete recycling is achieved over 6 hrs, as shown in Figure 8. Point fibres are found that show rigidity associated with the presence of polymeric matrix. With a second reaction a complete result is achieved.

**Table 3. Reaction conditions**

| Examples | Fibre/solvent ratio (g/ml) | Ratio acetic acid/H₂O₂ % (v/v) | Acetic acid concentration in solution (M) | H₂O concentration in solution (M) | Temperature (°C) | Time (hrs) |
|---|---|---|---|---|---|---|
| Figure 4 | 1/60 | 80/20 | 10.09 | 2.51 | 120 | 4 |
| Figure 5 | 1/60 | 90/10 | 11.93 | 1.33 | 120 | 6 |
| Figure 6 | 1/60 | 80/20 | Recycled solvent | 2.51 | 120 | 4 |
| Figure 7 | 1/30 | 85/15 | 11.00 | 1.93 | 120 | 6 |
| Figure 8 | 1/25 | 90/10 | 11.93 | 1.33 | 120 | 6 |

## Claims

1. Method for recycling a cured epoxy resin and carbon fibre composite material **characterised in that** it comprises a first pyrolysis step and a second solvolysis step with water or with hydrogen peroxide and acetic acid.

2. Method according to claim 1, **characterised in that** the pyrolysis stage is carried out in a temperature range between 200 ºC and 650 ºC

3. Method according to claim 2 **characterised in that** the first step is carried out in a time between 2 hours and 8 hours.

4. Method according to any one of claims 1 to 3 **characterised in that** the solvolysis step is carried out in a temperature range between 80 ºC and 160 ºC.

5. Method according to claim 4 **characterised in that** the solvolysis step is carried out in a time between 2 and 6 hours.

6. Method according to any one of claims 1 to 5 **characterised in that** the volume/volume ratio acetic acid/water or hydrogen peroxide is in the range 50/50 to 99/1.

7. Method according to any one of claims 1 to 6 **characterised in that** the solvolysis step is carried out with continuous stirring.

8. Method according to any one of claims 1 to 7 **characterised in that** the acetic acid in the solvolysis step is acetic acid recycled from the method itself.
